Europäisches Patentamt

European Patent Office

Office européen des brevets

(19)

(11) Publication number: **0 145 026**
**B1**

(12) **EUROPEAN PATENT SPECIFICATION**

(45) Date of publication of patent specification: 08.06.88

(21) Application number: 84115484.2

(22) Date of filing: 14.12.84

(51) Int. Cl.⁴: **G 11 B 5/70,** G 11 B 5/714,
**G 11 B 5/845**

(54) **Film type magnetic recording medium and method of manufacturing the medium.**

(30) Priority: 15.12.83 JP 235022/83

(43) Date of publication of application:
19.06.85 Bulletin 85/25

(45) Publication of the grant of the patent:
08.06.88 Bulletin 88/23

(84) Designated Contracting States:
AT BE CH DE FR GB IT LI LU NL SE

(56) References cited:
EP-A-0 078 539
DE-A-3 148 766
DE-A-3 217 211
DE-A-3 217 212
DE-A-3 217 213

(73) Proprietor: **Saiteku Corporation**
**7-5-608 Minami-Aoyama 6-chome Minato-ku**
**Tokyo (JP)**

(72) Inventor: **Takahashi, Yasunori**
**No. 5-20 Todoroki 2-Chome Setagaya-ku**
**Tokyo (JP)**

(74) Representative: **Reinhard, Skuhra, Weise**
**Leopoldstrasse 51**
**D-8000 München 40 (DE)**

**Description**

Background of the invention
Field of the invention

This invention relates to a magnetic recording medium, particularly a film type magnetic recording medium which has an excellent recording or reproducing capability for high density magnetic recording such as digital recording, analogue recording or PCM (Pulse Code Modulator).

Description of the prior art

The quality of a magnetic recording medium is determined by the information storing capacity per unit area, that is, the recording density.

In order to increase the recording density, the prevailing opinion was so far, that from the experimental and theoretical point of view a higher antimagnetic force (Hc) and thinner layer of the medium were necessary. This view has been based on the idea of utilizing the magnetic recording phenomenon by magnetizing the longitudinal component of the magnetic medium, that is by employing the horizontal magnetizing mode effectively.

Accordingly, the conventionally coated magnetic recording media being suitable for analogue recording, for example, have been media produced by vertically arranging magnetic grains on a horizontally arranged magnetic grain layer on a substrate; a medium being suitable for digital recording, for example was a medium produced by arranging magnetic grains at random or horizontally. When these magnetic recording media are applied for high density recording, the residual magnetic poles are facing each other. This causes a condition in which the magnetic poles strongly repel each other, and the maximum value is shown around the center of the transfer of the demagnetizing field within a magnetic layer of the medium. Consequently, the distribution of the magnetization is modified to have a gradual gradient, and thus, in a high density magnetic recording, where this transfer area is aligned with a slight shift, the amplitude, i.e. the magnetization rate, diminishes as the recording density is increased. With these conditions to attain high density recording, an increase of the antimagnetic force of the medium or thinning of the film was tried to diminish the demagnetizing function.

However, thinning of the film causes problems such as the decrease of the productivity, the mechanical strength or the output power. Particularly in case of a coated film, thinning the film to 0.8 micrometer or less reduces the mechanical strength. Furthermore, the increase of the antimagnetic force and thinning of the film causes problems in the relation of the magnetomotive force between the magnetic medium and the magnetic head at the time of write-in and read-out, SN ratio of the reproduced signal, AC or DC noise and the coarseness of the magnetic medium surface.

Moreover, such magnetic coating materials generally have the disadvantage that drying or hardening the coated film material after forming it coarsens the film surface. The reason for this is supposed to be that a solvent included in the coated film material serves to agitate the magnetic grains by whirls when the solvent evaporates. Accordingly, in the conventional method, according to the above mentioned process, the quality of the surface is improved by such methods as polishing or calendering, etc.

In every case, the conventional magnetic recording medium is characterized by either increasing its horizontal or its vertical component, but the increase of the magnetic recording characteristics of both the horizontal and the vertical component, was never attained, that is, the angular ratio Br/Bs wherein Br denotes the magnetic flux density, and Bs denotes the maximum magnetic flux density. The angular ratio: Br/Bs=1 is the ideal state.

Summary of the invention

An object of the present invention is to provide a film type magnetic recording medium having an angular ratio Br/Bs of 0.6 or more of both the horizontal component and the vertical component to attain high density magnetic recording, and having excellent properties for both analogue and digital recording.

Another object of the present invention is to provide a method for manufacturing said medium.

A film type magnetic recording medium comprising a coating film applied on a substratum, needle-shaped magnetic grains being orientated in said coating film with their longitudinal axes perpendicular to the film surface, said magnetic grains overlapping one another and some intrude into the range of others, wherein the film thickness is 1.1 to 2.2 times the average length of the grains, can accomplish said object, that is, it has an excellent property in that the angular ratio Br/Bs of those horizontal and vertical components respectively are 0.6 or more. As a result, it is possible to attain high density magnetic recording.

The film type magnetic recording medium is manufactured by applying on a substratum a fluid film forming material, in which needle-shaped magnetic grains are dispersed, and drying or hardening the film forming material in a magnetic field orientated perpendicularly toward the film surface, said magnetic grains overlapping one another and some intrude into the range of others, wherein a coated film is formed having the thickness of 1.1 to 2.0 times the average length of the magnetic grains.

A film type magnetic recording medium according to the head portion of claim 1 is known from DE—A—3 217 212, however there is only disclosed the effect of the average length of the magnetic grains under 3 mm and the length/width ratio of the magnetic grains (1—3) but there is not mentioned the claimed

2

effect of the ratio of film thickness to average length of needle-shaped magnetic grains, which is very important for attaining a higher angular ratio Br/Bs, which gives excellent recording and reproducing capability for high density magnetic recording.

Brief description of the drawings:

Fig. 1 is a view of a microphoto enlarged thirtythousand times, showing the cross-section of an embodiment of a film type magnetic recording medium according to the present invention,

Figs, 2, 3, 4, 5 and 6 are diagrammatic sectional views of the embodiments of devices for accomplishing the method of the present invention for a magnetic disc,

Fig. 7 is a sectional view of an embodiment of a device for accomplishing the method of the present invention for a magnetic tape,

Figs. 8, 9, 10, 11 and 12 show the characteristic of the film type magnetic recording medium of the present invention.

Detailed description of the preferred embodiments

A first embodiment of the invention is related to a film type magnetic recording medium comprised of a film coated on a substratum, in which coated film needle-shaped magnetic grains are oriented with their longitudinal axes perpendicular to the film surface in a multilayer state, and having the film thickness of 1.1 to 2.0 times the average length of the grains.

The magnetic grains are not aligned in a single layer perpendicular to the film surface, but in a condition or state where the magnetic grains overlap one another and some intrude into the range or region of others.

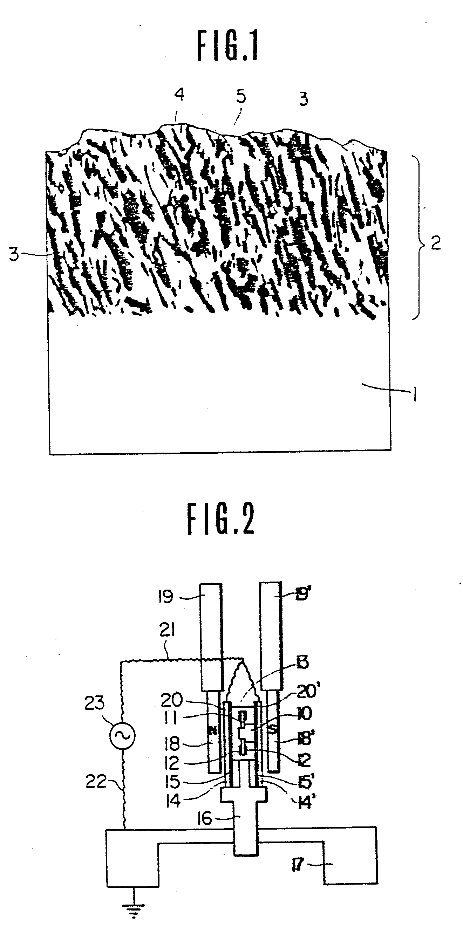

Fig. 1 is a view of a microphotograph (enlarged 30 thousand times) of a vertical cross-section of an embodiment of a film type magnetic recording medium of the present invention. Reference number 1 denotes a substratum (base film); 2 denotes an applied film layer. It is to be noted that in this coating film, needle-shaped magnetic grains 3 having their longitudinal axes perpendicular to the film surface 4 overlap one another and some enter the regions of others. The film material is indicated at 5.

To facilitate understanding, a second embodiment of the invention will now be explained.

The principle of this invention is that a fluid film forming material, in which needle-shaped magnetic grains are dispersed, is applied to form a coating film having the thickness of 1.1 to 2.0 times the average length of the magnetic grains. Then, the formed film material is dried or hardened to fix with a heating unit (for exsample, nesa glass, etc.) in a magnetic field perpendicular to the film surface, i.e., applying a vertical magnetic flux perpendicular to the film surface.

In the magnetic field perpendicular to the film surface the longitudinal axes of the needle-shaped magnetic grains in the fluid film forming material are arranged perpendicular to the film surface. Thus, by drying or hardening the fluid film forming material for solidification, it is possible to obtain a film type magnetic recording medium in which needle-shaped magnetic grains are longitudinally arranged perpendicular to the film surface. .

In this process, the strength of the applied magnetic field should be 2.5 to 10 times, preferably 4 to 8 times the value of the antimagnetic force (Hc) of the magnetic grains.

For example, when magnetic grains of Hc 31.824 kA/m is used, the strength of the magnetic field to be employed is 79.56 to 318.24 kA/m, most preferably 127.296 to 254.593 kA/m. In order to provide this magnetic field, a permanent magnet or an electromagnet can be utilized.

Commercial magnetic grains can be utilized for the present invention, and it is possible to obtain a magnetic recording medium having excellent characteristics without using expensive grains of high antimagnetic force.

Furthermore, though various kinds of the film materials can be utilized, it is possible to easily manufacture the multilayer magnetic recording medium of the present invention particularly by using polyvinyl butyral. Details will be explained in Example 1 and 2.

The present invention has an excellent effect with discs and with tapes, irrespective of the form of the magnetic film.

Now, an embodiment of a device for performing the method of the present invention is explained in detail with reference to the accompanying drawings.

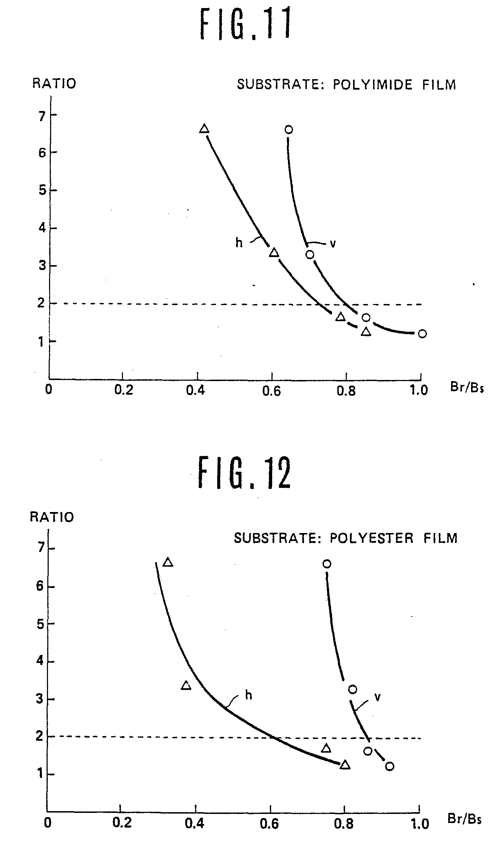

In Fig. 2, 11 denotes a disc substratum attached to an installation base 10 and 12 denotes a film obtained by applying magnetic coating material (a mixture of magnetic grains and fluid film forming materials) to the disc substratum.

This disc substratum is stored in a non-metal vessel 13. Nesa glasses 14, 14' arranged at both ends of the vessel 13 are attached to a conductive metal supporting base 16, so that nesa glass surfaces 15 and 15' are positioned against each surface of the disc. The supporting base 16 is attached to a conductive metal basis 17. Moreover, a vertical magnetic field toward the coated film is generated from both ends of magnetic poles 18, 18' through both nesa glass by means of electromagnets 19, 19'. The hardening of this coating film forming material is carried out as follows. The nesa electrodes 20, 20' at the upper part of the nesa glasses are connected to a power source 23 through a lead wire 21 and to the ground through a lead wire 22. As the lower parts of the nesa glasses are connected to the ground through the conductive metal supporting base 16 and conductive metal basis 17, there is provided an electric circuit. The nesa glasses are

**0 145 026**

heated by the power source 23 (AC 100V, Current about 1.6A, Resistance of the nesa film (100 Ohm) to adjust the temperature to the appropriate solidification temperature of the applied film forming material.

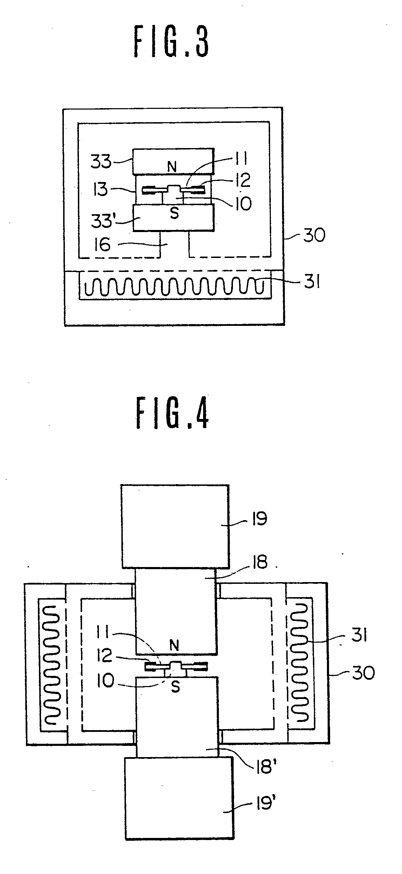

Fig. 3 shows an example for accomplishing the present invention by means of a hardening furnace 30. A disc substratum 11 having a magnetic coating film 12 on one side or both sides is attached to the installation base 10 in a nonmagnetic container or vessel 13. Permanent magnets 33, 33' are placed respectively on the upper and the lower sides of the nonmagnetic vessel 13 so as to provide a magnetic field perpendicular to the coating film surface. The overall construction described above is supported on the supporting base 16 in the hardening furnace. A heater 31 is provided on the bottom of the hardening furnace to harden the coated film by setting or adjusting the temperature of the furnace.

Fig. 4 shows an example where electromagnets 19, 19' are utilized in place of the permanent magnets in the device of Fig. 3. Both magnetic poles extend sufficiently, so that both magnetic poles 18, 18' of the electromagnets approach a magnetic film 12 applied or coated on a disc substratum 11 as closely as possible. The substratum 11 having the coating film 12 is placed on an installation base and is inserted between both magnetic poles. The hardening is carried out by setting or adjusting the temperature of heaters 31 provided on both side walls.

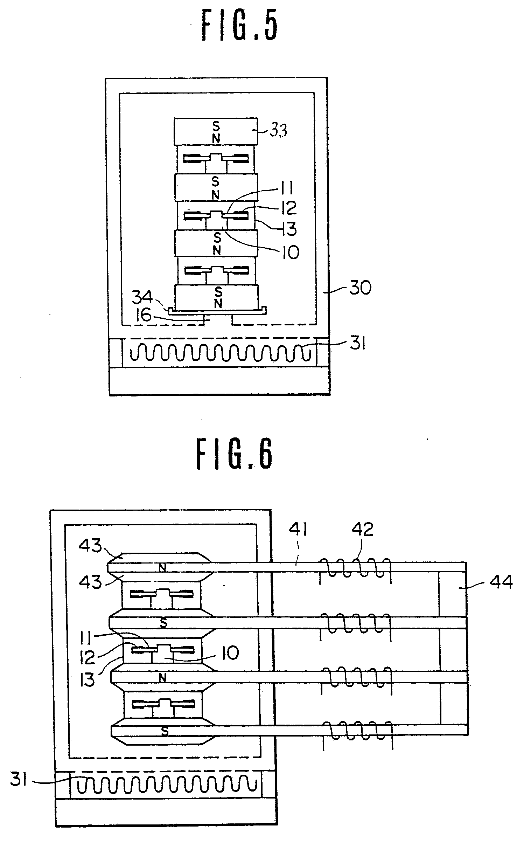

Fig. 5 is a diagrammatic sectional view showing a manufacturing device for simultaneously treating a plurality of discs. A disc substratum 11 having a magnetic film 12 applied by a rotary coating method, is provided on an installation base 10 in a vessel 13 and a plurality of vessels are inserted respectively into the intervals of plural steps or arrangements of permanent magnets 33. The whole construction described above is placed on a support 34 and fixed via a supporting base 16 on a hardening furnace 30 provided with a heater 31. This heater serves to harden the magnetic film at once.

Fig. 6 is a cross-sectional view showing a manufacturing device utilizing electromagnets instead of the permanent magnets in the device of Fig. 5. Namely, it is the device employing the way or style in which plural steps or dispositions of electromagnets are arranged. 41 denotes magnet cores and 42 denotes coils, and the coils are wound respectively around the cores. The end portions of the magnet cores provide magnetic poles 43 on both surfaces so as to provide an effective vertical magnetic field, and a plurality of these constructions are stacked similarly to that of Fig. 5. Subsidiary cores 44 are provided respectively for these constructions for shielding the magnetic field to the outside; hence, magnetically closed circuits are built up. The magnetic poles should be arranged as shown in the drawing. Setting of their polarity is defined by the direction of the current flowing through the coil, and the strength of the vertical magnetic field is set by the amplitude of the current.

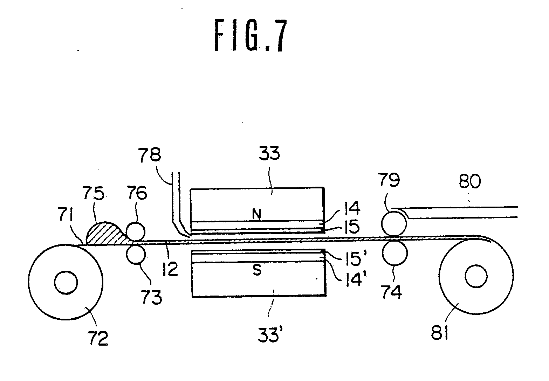

Fig. 7 shows an example wherein the present invention is arranged to be adapted particularly for the manufacture of the magnetic tape. Namely, the reference number 71 of this figure denotes a tape material (polyester etc.) which is supplied from a tape roll 72 via tape-supplying rollers 73, 74 at a predetermined speed. The magnetic coating material 75 forms a film of predetermined thickness on the tape by means of a roller 76 providing a coating film thickness. The magnetic coating film 12, which has not yet dried or hardened is passed between one pair of vertical magnetic field generators 33, 33' (electromagnets or permanent magnets). At this process, current from a power source is supplied to both nesa electrodes provided on nesa glasses 14, 14' disposed on the vertical magnetic field generators to heat the film 12 passing between the nesa glasses. It is desirable to always discharge a certain flow rate of air or $N_2$ gas, etc. to the coating film surface from a gas stream discharger pipe 78 and to control the temperature of the film so as to be about 60°C—180°C by the heat emission of the nesa glasses with the discharge of the gas or air in order to harden the magnetic coating materials.

Furthermore, a reverse rotating roller 79 for removing projections is rotated in reverse to apply a pressure of 0.00981—0.981 bar to the coating film, and by the function of this roller, solidified projections on the magnetic film are removed. Powdery fragments removed from this roller 79 are discharged to the outside by an absorber 80. The completed magnetic tape is wound by a winding roller 81.

The method of the present invention will be explained on the basis of the following examples, then the characteristics of the film tape multilayer magnetic recording medium obtained by this invention will be explained.

Example 1

70 g PVB (polyvinyl butyral) powder and 700 g needle-shaped gamma-$Fe_2O_3$ magnetic grains (average length 0.36 micrometer X the average diameter 0.045 micrometer, the antimagnetic force 30.392 kA/m were put into a kneader or a dispersion mill and were mixed therein for about 15 minutes. Next, 250 g cellosolve acetate was gradually added to the mixture and the kneader mixing or dispersion mixing was carried out for about 4 hours. The 480 g mixture was put into a 3 liter ball mill pot or into a 3 liter grain mill device and 700 g·cellosolve acetate was added thereto. 7 days with the ball mill or 24 hours with the grain mill were necessary to disperse the magnetic grains. Finally 120 g phenol resin, 300 g 40% butyl cellosolve solution of epoxy resin, and 500 g butyl cellosolve were added thereto and mixed to form a magnetic disc coating material.

Then, this coating material (viscosity: 170 mPa . s at room temperature) was applied to form coated films having the thickness in the range of 0.45 micrometer to·2.40 micrometer on purified aluminium substrates or on aluminium substrates, where 1 micrometer thickness of clear (resin) covering was provided, and also was applied to form coated films having the thickness in the range of 0.45 micrometer to

4

15.00 micrometer on polyimide film substrates by means of the spin or roll method. Then, the coated film material was hardened under a perpendicular magnetic field of 198.901 kA/m, that is, a magnetic field 6.5 times the value of Hc (antimagnetic force) of the magnetic grains, at a temperature of 200°C for 2 hours with the manufacturing device of Fig. 2.

When the film type magnetic recording medium formed as stated above was cut vertically toward the film surface and a microphoto of the cross-sectional view was observed, it was confirmed that the longitudinal axes of the needle-shaped magnetic grains were arranged perpendicular to the film surface in the state or condition similar to that as shown in Fig. 1.

The results of measuring the angular ratios (Br/Bs, Bs: 397.802 kA/m) of the vertical and horizontal components are shown with the antimagnetic field (H=4πB) correction of the angular ratio of the vertical component in the Table 1, 2 and 3. B is the residual magnetic flux density.

TABLE 1

Relation between the coating film thickness and the angular ratio of the film type magnetic recording medium

Bs: 397.802 kA/m

| Substratum: polyimide film (75 micrometer thickness) | | Angular ratio | | |
|---|---|---|---|---|
| Coating film thickness (micrometer) | Ratio of the coating film thickness to the length of the magnetic grains | Factor: vertical component | Corrected vertical component | Horizontal component |
| | | Symbol: ○ | ○ | △ |
| 0.45 | 1.25 | 0.64 | 1.00 | 0.85 |
| 0.60 | 1.67 | 0.56 | 0.85 | 0.78 |
| 1.20 | 3.33 | 0.46 | 0.70 | 0.60 |
| 2.40 | 6.67 | 0.38 | 0.64 | 0.41 |
| 5.00 | 13.89 | 0.37 | 0.56 | 0.34 |
| 10.00 | 27.78 | 0.36 | 0.51 | 0.31 |
| 15.00 | 41.67 | 0.33 | 0.49 | 0.29 |

TABLE 2

Relation between the coating film thickness and the angular ratio of the film type magnetic recording medium

Bs: 397.802 kA/m

| Substratum: aluminum (2 mm thickness) | | Angular ratio | | |
|---|---|---|---|---|
| Coating film thickness (micrometer) | Ratio of the coating film thickness to the length of the magnetic grains | Factor: vertical component | Corrected vertical component | Horizontal component |
| | | Symbol: | ○ | △ |
| 0.45 | 1.20 | 0.58 | 0.90 | 0.77 |
| 0.60 | 1.67 | 0.54 | 0.87 | 0.70 |
| 1.20 | 3.33 | 0.35 | 0.84 | 0.39 |
| 2.40 | 6.67 | 0.33 | 0.77 | 0.35 |

TABLE 3

Relation between the coating film thickness and the angular ratio of the film type magnetic recording medium

Bs: 397.802 kA/m

| Substratum: aluminum with 1 micrometer thickness clear covering | | Angular ratio | | |
|---|---|---|---|---|
| Coating film thickness (micrometer) | Ratio of the coating film thickness to the length of the magnetic grains | Factor: vertical component | Corrected vertical component | Horizontal component |
| | | Symbol: | ○ | △ |
| 0.45 | 1.25 | 0.61 | 0.98 | 0.82 |
| 0.60 | 1.67 | 0.59 | 0.92 | 0.75 |
| 1.20 | 3.33 | 0.49 | 0.87 | 0.35 |
| 2.40 | 6.67 | 0.45 | 0.82 | 0.32 |

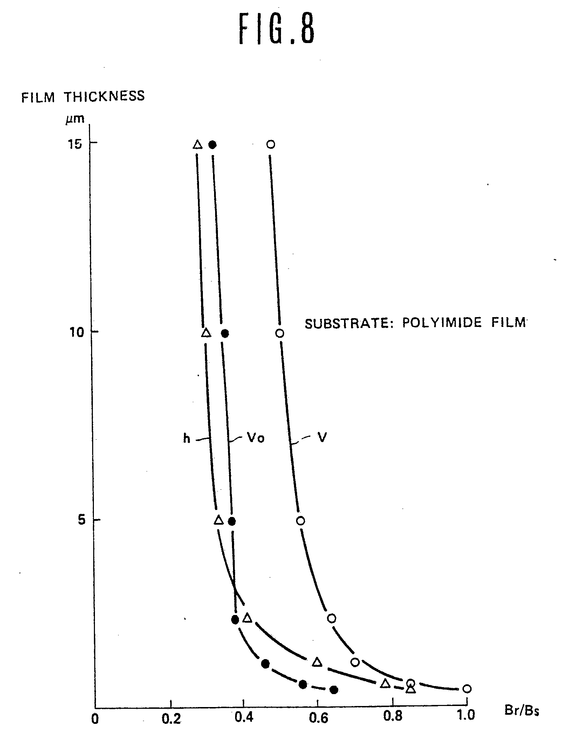

Fig. 8 shows the relation between the film thickness and the angular ratio of the polyimide film in Table 1. Herein, the X axis denotes the angular ratio and the Y axis denotes the film thickness (micrometer). The curve h, the curve $v_0$, and the curve v respectively denote a horizontal component, a vertical component and a corrected value of the vertical component with the antimagnetic force.

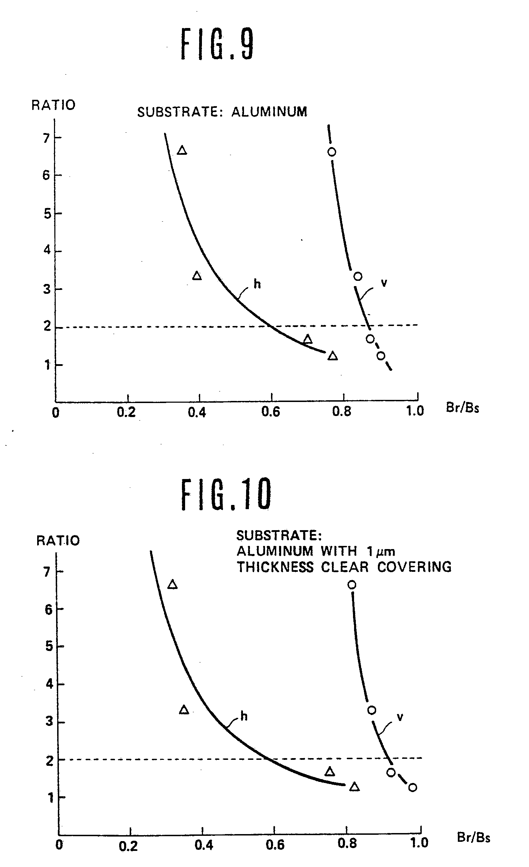

Fig. 9 to 11 show the changing state of the value of horizontal component (h) and the corrected value of the vertical component (v) of the angular ratio, where the Y axis denotes the ratio of the film thickness to the average length of needle-shaped magnetic grains and the X axis denotes the angular ratio.

Figs. 9, 10 and 11 are related respectively to an aluminium substrate, said aluminium base with a clear resin covering and a polyimide film substrate.

Respective cases show that the value of the horizontal component and the corrected value of the vertical component of the angular ratio are 0.6 or more when the ratio of the film thickness to the average length of the magnetic grains is 2.0 or less.

This means that the film type multilayer magnetic recording medium which can utilize both the horizontal and vertical components for magnetic recording and reproducing, that is, the film type multi-layer magnetic recording medium of the present invention, should have a film thickness of less than 2.0 times the average length of needle-shaped magnetic grains. The reason to set the lower limit of this ratio to 1.1 is that it is necessary to set the film thickness slightly more than the average length of the magnetic grains to form the vertical construction of the needle-shaped magnetic grains in the film. The devices shown in Figs. 3 and 4 provided similar effects.

The coarseness of the film surface of the vertically aligned disc for the multi-layer magnetic recording (in case of 238.681 kA/m, an aluminium substrate and 0.60 micrometer thickness of the coated film) immediately after hardening was Ra=0.0243 micrometer. This result is better than that of a similarly processed conventional non-aligned disc, Ra=0.085 micrometer, or of a horizontally aligned disc, Ra=0.06 micrometer.

Example 2

To make magnetic coating material for a magnetic tape, 1.9 kg PVB (polyvinyl butyral) powder and 20 kg magnetic grains as used in Example 1, were put into a kneader or a dispersion mill and mixed for about 15 minutes. Next, 22.4 kg cellosolve acetate was gradually added thereto and kneading or dispersion milling was carried out for 4 hours. 740 g of this mixture was put into a 3 liter ball mill pot (3 mmφ balls, capacity 3 kg) or a 3 liter grain mill, and as 405 g cellosolve acetate was added thereto, the dispersion of the magnetic grains was carried out for 7 days in the ball mill pot of for 24 hours in the grain mill. Next, 545 g 20% PVB butyl cellosolve solution was added and mixed to prepare the magnetic tape coating materials. Afterwards, this coating material (viscosity 1200 mPa . s) was applied to a polyester film (Mylar® film) stored in the state of the purified surface at a film transport speed of 1.0 cm/s by the device shown in Fig. 7 and while coating, the gap of the roller 76 which provides the thickness of the coating film 76 was arranged to form various kinds of film thickness. This coating film was passed in the undried state through the vertical magnetic field, and while passing, the film was rapidly dried by air stream and the heat in the air stream (in the range of 60°C to 180°C) caused by the electric current applied to the nesa electrodes.

Afterwards, it was passed through the reverse rotary roller 79 to remove projections. The characteristics of the magnetic coated film for a magnetic tape obtained by the above-stated process is shown in Table 4.

TABLE 4

Relation between the coating film thickness and the angular ratio of the film type magnetic recording medium (tape)

Bs: 397.802 kA/m

| Substratum: Mylar® film (75 micrometer thickness) | | Angular ratio | | |
|---|---|---|---|---|
| Coating film thickness (micrometer) | Ratio of the coating film thickness to the length of the magnetic grains | Factor: vertical component | Corrected vertical component | Horizontal component |
| | | Symbol: | ○ | △ |
| 0.45 | 1.25 | 0.59 | 0.92 | 0.80 |
| 0.60 | 1.67 | 0.55 | 0.86 | 0.75 |
| 1.20 | 3.33 | 0.47 | 0.82 | 0.36 |
| 2.40 | 6.67 | 0.42 | 0.75 | 0.32 |

This is shown in Fig. 12. From Table 4 and Fig. 12, it is clear that excellent results can be obtained when the film thickness is 1.1 to 2.0 times the average length of the magnetic grains, even with Mylar® film (polyester film).

Moreover, it was also observed that the strength of the coated film of the film type medium of the present invention is excellent even in case of a thin coated film.

**Claims**

1. A film type magnetic recording medium comprising a coating film (5) applied on a substratum (1), needle-shaped magnetic grains (3) being orientated in said coating film (5) with their longitudinal axes perpendicular to the film surface (4), said magnetic grains (3) overlapping one another and some intrude into the range of others, characterized in that the film thickness is 1.1 to 2.0 times the average length of the grains (3).

2. A medium according to claim 1, wherein the material of the film (5) is polyvinyl butyral.

3. A medium according to claim 1, wherein the substratum (1) is an aluminium sheet.

4. A medium according to claim 1, wherein the substratum (1) is a plastic film.

5. A medium according to claim 4, wherein the plastic film substratum (1) is a polyimide film.

6. A medium according to claim 4, wherein the plastic film substratum (1) is a polyester film.

7. A method of manufacturing a film type magnetic recording medium, comprising the following steps: applying on a substratum a fluid film forming material, in which needle-shaped magnetic grains are dispersed, and drying or hardening the film forming material in a magnetic field orientated perpendicularly toward the film surface, said magnetic grains overlapping one another and some intrude into the range of others, characterized by forming a coated film having the thickness of 1.1 to 2.0 times the average length of the magnetic grains.

8. A method according to claim 7, wherein the fluid film forming material is mainly composed of a solution of polyvinyl butyral.

9. A method according to claim 7, wherein an aluminium sheet is used as the substratum.

10. A method according to claim 7, wherein a plastic film is used as the substratum.

11. A method according to claim 10, wherein the plastic film substratum is a polyimide film.

12. A method according to claim 10, wherein the plastic film substratum is a polyester film.

13. A method according to claim 7, wherein the strength of the magnetic field is set 2.5 to 10 times the value of the antimagnetic force (Hc) of the magnetic grains.

**Patentansprüche**

1. Magnetischer Aufzeichnungsträger vom Filmtyp, bestehend aus einem Beschichtungsfilm (5), der auf einer Unterlage (1) aufgebracht ist, nadelförmigen magnetischen Körnern (3), die in dem Beschichtungsfilm (5) mit ihren Längsachsen senkrecht zu der Filmoberfläche (4) orientiert sind, wobei die

7

# 0 145 026

magnetischen Körner (3) einander überlappen und wobei einige in dem Bereich der anderen eindringen, dadurch gekennzeichnet, daß die Filmdicke das 1,1 bis 2,0-fache der Durchschnittslänge der Körner (3) beträgt.

2. Träger nach Anspruch 1, dadurch gekennzeichnet, daß das Material des Films (5) Polyvinylbutyral ist.

3. Träger nach Anspruch 1, dadurch gekennzeichnet, daß die Unterlage (1) eine Aluminiumfolie ist.

4. Träger nach Anspruch 1, dadurch gekennzeichnet, daß die Unterlage (1) eine Plastikfolie ist.

5. Träger nach Anspruch 4, dadurch gekennzeichnet, daß die Plastikfolienunterlage (1) aus einer Polyamidfolie besteht.

6. Träger nach Anspruch 4, dadurch gekennzeichnet, daß die Plastikfolienunterlage (1) aus einer Polyesterfolie besteht.

7. Verfahren zur Herstellung eines magnetischen Aufzeichnungsträgers vom Filmtyp, bestehend aus den folgenden Verfahrensschritten:

Aufbringen eines flüssigen filmbildenden Materials, in dem nadelförmige magnetische Körner verteilt sind, auf einer Unterlage und Trocknen bzw. Härten des filmbildenden Materials in einem magnetischen Feld, das senkrecht zu der Filmoberfläche orientiert ist, wobei die magnetischen Körner einander überlappen und wobei einige in den Bereich anderer eindringen, dadurch gekennzeichnet, daß ein Beschichtungsfilm gebildet wird, dessen Dicke das 1,1—2,0-fache der Durchschnittslänge der magnetischen Körner beträgt.

8. Verfahren nach Anspruch 7, dadurch gekennzeichnet, daß das den fluidfilmbildende Material hauptsächlich aus einer Lösung aus Polyvinylbutyral zusammengesetzt wird.

9. Verfahren nach Anspruch 7, dadurch gekennzeichnet, daß eine Aluminiumfolie als Unterlage verwendet wird.

10. Verfahren nach Anspruch 7, dadurch gekennzeichnet, daß eine Plastikfolie als Unterlage verwendet wird.

11. Verfahren nach Anspruch 10, dadurch gekennzeichnet, daß die Plastikfolienunterlage aus einer Polyamidfolie besteht.

12. Verfahren nach Anspruch 10, dadurch gekennzeichnet, daß die Plastikfolienunterlage aus einer Polyesterfolie besteht.

13. Verfahren nach Anspruch 7, dadurch gekennzeichnet, daß die Stärke des magnetischen Feldes auf das 2,5—10-fache des Wertes der antimagnetischen Kraft (Hc) der magnetischen Körner eingestellt wird.

## Revendications

1. Elément du type film pour l'enregistrement magnétique comprenant un film de revêtement (5) appliqué sur un substrat (1), des grains magnétiques aciculaires (3) qui sont orientés, dans ledit film de revêtement (5), de manière que leurs axes longitudinaux soient orthogonaux à la surface (4) du film, lesdits grains magnétiques (3) se chevauchant les uns les autres et certains d'entre eux pénétrant dans la région d'autres de ceux-ci, caractérisé en ce que l'épaisseur du film est de 1,1 à 2,0 fois la longueur moyenne des grains (3).

2. Elément selon la revendication 1, dans lequel la matière du film (5) est le butyral de polyvinyle.

3. Elément selon la revendication 1, dans lequel le substrat (1) est une feuille d'aluminium.

4. Elément selon la revendication 1, dans lequel le substrat (1) est un film de matière plastique.

5. Elément selon la revendication 4, dans lequel le substrat (1) formé d'un film de matière plastique est un film de polyimide.

6. Elément selon la revendication 4, dans lequel le substrat (1) formé d'un film de matière plastique est un film de polyester.

7. Procédé pour la fabrication d'éléments du type film pour l'enregistrement magnétique, comprenant les étapes suivantes:

application sur un substrat d'un matériau fluide formateur de film, dans lequel des grains magnétiques aciculaires sont dispersés, et séchage ou durcissement du matériau formateur de film dans un champ magnétique orienté perpendiculairement à la surface du film, lesdits grains magnétiques se chevauchant les uns les autres et certains d'entre eux pénétrant dans la région d'autres de ceux-ci, caractérisé en ce que l'on forme un film de revêtement ayant une épaisseur de 1,1 à 2,0 fois la longueur moyenne des grains magnétiques.

8. Procédé selon la revendication 7, dans lequel le matériau fluide formateur de film est principalement composé d'une solution de butyral de polyvinyle.

9. Procédé selon la revendication 7, dans lequel une feuille d'aluminium est utilisée comme substrat.

10. Procédé selon la revendication 7, dans lequel un film de matière plastique est utilisé comme substrat.

11. Procédé selon la revendication 10, dans lequel le substrat formé d'un film de matière plastique est un film de polyimide.

12. Procédé selon la revendication 10, dans lequel le substrat formé d'un film de matière plastique est un film de polyester.

13. Procédé selon la revendication 7, dans lequel l'intensité du champ magnétique est réglée à une valeur comprise entre 2,5 et 10 fois la valeur de la force antimagnétique (Hc) des grains magnétiques.

8

# FIG.1

# FIG.2

0 145 026

# FIG.3

# FIG.4

# FIG.5

S
N — 33

S
N — 11
— 12
— 13
— 10

S
N

34
16

S
N

— 30

— 31

# FIG.6

43
43

N

41    42

— 44

S

11
12     10
13

N

31

S

# FIG.7

# FIG. 8

FILM THICKNESS

μm

SUBSTRATE: POLYIMIDE FILM

h — Vo — V

Br/Bs

# FIG.9

SUBSTRATE: ALUMINUM

RATIO

Br/Bs

# FIG.10

SUBSTRATE:
ALUMINUM WITH 1 μm
THICKNESS CLEAR COVERING

RATIO

Br/Bs

# F I G . 11

RATIO    SUBSTRATE: POLYIMIDE FILM

# F I G . 12

RATIO    SUBSTRATE: POLYESTER FILM